(19) **Europäisches Patentamt**

**European Patent Office**

**Office européen des brevets**

(11) Publication number: **0 202 793**

**A2**

(12) **EUROPEAN PATENT APPLICATION**

(21) Application number: **86303173.8**

(22) Date of filing: **25.04.86**

(51) Int. Cl.⁴: **B 23 K 35/30**
**C 22 C 38/08, B 23 P 6/00**

(30) Priority: **25.04.85 US 727175**

(43) Date of publication of application:
**26.11.86 Bulletin 86/48**

(84) Designated Contracting States:
**CH DE FR 'GB LI**

(71) Applicant: **WESTINGHOUSE ELECTRIC CORPORATION**
**Westinghouse Building Gateway Center**
**Pittsburgh Pennsylvania 15235(US)**

(72) Inventor: **Clark, Robert Edward**
**3924 Lake Mira Drive**
**Orlando Florida 32817(US)**

(72) Inventor: **Amos, Dennis Ray**
**604 Ferndale Drive**
**Rock Hill South Carolina 29730(US)**

(72) Inventor: **Friedman, Lawrence Macy**
**304 Leroi Road**
**Pittsburgh Pennsylvania 15208(US)**

(74) Representative: **van Berlyn, Ronald Gilbert**
**23, Centre Heights**
**London, NW3 6JG(GB)**

(54) Method of weld repairing steam turbine rotors.

(57) Method for effecting weld repairs to a nickel-molybdenum-vanadium steel steam turbine rotor. One or more weld passes are made using a filler metal to repair a defect in the rotor. A filler metal alloy is prepared consisting essentially of, by weight, per cent 0.090-1.110 carbon, 1.25-1.80 manganese, up to 0.0010 phosphorus, up to 0.010 sulfur, 0.20-0.50 silicon, 1.40-2.10 nickel, up to 0.30 chromium, 0.25-0.55 molybdenum, up to 0.05 vanadium, up to 0.10 titanium, up to 0.10 zirconium, up to 0.10 aluminum, up to 0.20 copper, up to 0.0015 antimony, up to 0.015 tin, up to 0.020 arsenic, and, up to, in ppm, 35 oxygen, 25 nitrogen, and 10 hydrogen, the balance being iron. This alloy is vacuum induction melted. Preferably this alloy has 0.10-0.25 chromium and a maximum of 0.010 zirconium. Welds using this filler metal exceed the rotor base material in strength, notch toughness, and resistance to temper embrittlement.

1                              52,192

# METHOD OF WELD REPAIRING STEAM TURBINE ROTORS

This invention relates a method of weld repairing steam turbine rotors and, in particular, nickel-molybdenum-vanadium steel steam turbine-generator rotors whereby high strength and high toughness repairs are provided.

Recent technology advances such as vacuum carbon deoxidization, ladle refining, computer controlled forging pressing, and ingot solidification designs have greatly improved rotors. Some units and especially older units currently in service, display signs of general wear, exterior cracking, rubs, and other degradation. These "wear-out" phenomena are probably more common today because of the trend for unit life extension and upgrading rather than replacing these machines with new turbo-generator sets.

In the past, welding repairs have been difficult because commercially available low alloy steel filler metals suitable for nickel-molybdenum-vanadium and nickel-chromium-molybdenum-vanadium steel rotor repair (by techniques such as gas tungsten arc welding) have produced either high strength welds with low toughness (particularly from temper embrittlement), or (in the case of the 100S-1 composition, shown in Table I) have excellent toughness, but too low a strength.

## TABLE I

### Typical Composition of 100S-1 Welding Wire

| | |
|---|---|
| 0.078 C | 0.45 Mo |
| 0.005 P | 0.06 Cr |
| 0.004 S | 0.001 V |
| 0.42 Si | 0.027 Cu |
| 1.35 Mn | 0.011 Al |
| 1.90 Ni | 0.016 Ti |
| | 0.0006 Zr |

Accordingly, the present invention resides in a method for effecting weld repairs to a nickel-molybdenum-vanadium steel steam turbine-generator rotor which comprises making one or more weld passes using a filler metal alloy to repair a defect in the rotor; characterized by preparing a filler metal alloy consisting essentially of, by weight per cent, 0.090-0.110 carbon, 1.25-1.80 manganese, up to 0.010 phosphorus, up to 0.010 sulfur, 0.20-0.50 silicon, 1.40-2.10 nickel, up to 0.30 chromium, 0.25-0.55 molybdenum, up to 0.05 vanadium, up to 0.10 titanium, up to 0.10 zirconium, up to 0.10 aluminum, up to 0.20 copper, up to 0.0015 antimony, up to 0.015 tin, up to 0.020 arsenic, and up to, in ppm, 35 oxygen, 25 nitrogen, and 10 hydrogen, the balance being iron; and vacuum melting said alloy, whereby welds using said filler material exceed the rotor base-material in strength, notch toughness, and resistance to temper embrittlement.

It has been discovered that both high strength and high toughness can be obtained when a vacuum induction melted modified 100S-1 composition of weld filler metal is used. The composition changes include higher carbon and upper limits on phosphorus, antimony, tin, and arsenic. Preferably it also utilizes a narrow range of chromium and a reduced maximum zirconium.

The welding filler metal of this invention has been utilized in gas tungsten arc welding (cold wire), submerged arc welding, and gas metal arc welding to perform repairs on nickel-chromium-molybdenum-vanadium steels (as used herein the term nickel-molybdenum-vanadium steels also includes nickel-chromium-molybdenum-vanadium steels). The resultant welds exceed all of the rotor material minimum requirements for yield strength and at the same time provide the required toughness (as indicated by the 75F impact strength, the 50% FATT the temper embrittlement resistance, and the fatigue endurance limit shown in Table II).

Gas tungsten arc welding is the preferred process as it generally results in the best weld metal soundness as shown by ultrasonic testing, requires no preheat, has weld metal tensile and impact properties which exceed both the turbine and generator rotor base material specifications requirements by large margins, and develops the finest microstructural grain size. Submerged arc welding has a very high deposition rate, but requires preheating and produces the largest grain size of three processes (it still generally meets the original rotor base material tensile and impact specification requirements, even though this method gives properties which are the lowest of the three welding methods). Gas metal arc welding requires preheating of the component and produces an intermediate grain size and intermediate tensile and impact properties between gas tungsten arc and submerged arc techniques.

It should be noted that even with the improved weld filler metal alloy, difficulties may be incurred if the base metal is high in sulfur or copper (hot short cracking of the weld metal may result). While such rotors still may be repaired, the entire repair must be carefully evaluated.

Table II below compares experimental results of ASW A5.28 ER100S-1 compositions with the vacuum melted compositions of this invention (in weight per cent). Table III compares the 100S-1 chemistry with the chemistry of this invention (with preferred values in parenthesis).  In all cases, the balance is iron and incidental impurities.

TABLE II

Comparison of Mechanical Properties of the
Improved Weld Metal Composition With
AWS A5.28 ER100S-1 Weld Metal

|  | AWS A5.28 ER100S-1 | Improved Alloy |
|---|---|---|
| **(1) Tensile Properties** | | |
| UTS (KSI) | 108 | 120 |
| 0.2% Y.S. (KSI) | 101 | 115 |
| Elongation (%) | 27 | 27 |
| R.A. (%) | 75 | 75 |
| **(2) Charpy V-Notch Toughness (As-Deposited Condition)** | | |
| Room Temperature (75°F) Impact Energy (ft-K) | 180 | 180 |
| 50% FATT (°F) | -75°F | -150°F |
| **(3) Notch Toughness After A Temper Embrittling Treatment (3 day hold at 915°F + 4 day hold at 860°F + 7 day hold at 750°F)** | | |
| Room Temperature Notch Toughness (ft-lb) | 87 ft-lb | 141 ft-lb |
| -60°F Notch Toughness (ft-lb) | (8.5 ft-lb. at 0°F) | 60 ft-lb |
| Transition Temperature Shift (°F) | +154°F | +100°F |
| **(4) Fatique Endurance Limit[1]** | | |
| Air and Low Oxygen Steam | 0.8 | 1.2 |

———————————

[1] Ratio of weld metal to base metal values
(at equivalent tensile strengths)

TABLE III

| | AWS A5.28 ER100S-1 | Westinghouse Improved Chemistry |
|---|---|---|
| Carbon | 0.08 max. | 0.090-0.110 |
| Manganese | 1.25-1.80 | 1.25-1.80 |
| Phosphorus | 0.010 max. | 0.010 max. (0.005 max.) |
| Sulfur | 0.010 max. | 0.010 max. (0.005 max.) |
| Silicon | 0.20-0.50 | 0.20-0.50 |
| Nickel | 1.40-2.10 | 1.40-2.10 |
| Chromium | 0.30 max. | 0.10-0.30 (0.10-0.25) |
| Molybdenum | 0.25-0.55 | 0.25-0.55 |
| Vanadium | 0.05 max. | 0.05 max. |
| Titanium | 0.10 max. | 0.10 max. |
| Zirconium | 0.10 max. | 0.10 max. (0.010 max.) |
| Aluminum | 0.10 max. | 0.10 max. |
| Copper | 0.25 max. | 0.20 max. |
| Antimony | -- | 0.0015 max. |
| Tin | -- | 0.015 max. (0.0015 max.) |
| Arsenic | -- | 0.020 max. (0.006 max.) |
| Oxygen | -- | 35 ppm |
| Nitrogen | -- | 25 ppm |
| Hydrogen | -- | 10 ppm |

It will be noted that the composition employed in this invention has a higher carbon content than the 100S-1 composition. This is critical to obtaining the required strength. This is in contrast to the common practice of using less carbon in stainless steels, for example, to improve their weldability. Chromium preferably has both an upper limit, and in addition a minimum limit (to slightly raise strength but to minimize reduction of impact strength). Zirconium preferably has a greatly reduced maximum amount. Antimony, tin, phosphorus, and arsenic are controlled to keep temper embrittlement to a low level. In addition, it has been found that vacuum melting of the filler material and the use of virgin materials is essential to provide the weld cleanliness, toughness and fatigue limits such that the weld metal meets the properties shown in Table II. Our experiments have shown that when conventional melting practice is used, unsatisfactory fatigue and notch toughness properties result.

Post-weld heat treatment temperatures used following welding are conventional and are selected to be high as practical to minimize weld stresses, high enough to temper back the weld and heat effected zone hardness, and low enough to prevent overtempering of the unaffected base metal. A compromise between high and low temperatures is achieved by heating as close as practical to the rotor final tempering temperature (e.g. final tempering temperature +0, -50F). Rotors are generally post-weld heat treated locally adjacent to the repair area, with proper fixturing used to avoid shaft bowing.

Experiments comparing gas tungsten arc, submerged arc, and gas metal arc welding techniques indicate that gas tungsten arc welding gives the best results and is preferred whenever optimum properties are required.

It can be seen that the change in chemistry from the American Welding Society's A5.28 ER100S-1 filler metal specifications along with the vacuum melting and use of virgin starting materials has resulted in a weld metal which gives both the strength level and the toughness and fatigue strength required for the application. This is the only known technique in which the weld metal exceeds the NiMoV steel base metal material requirements for all types of original commercial steam turbine and generator rotors. Tests have also indicated that the corrosion resistance is also acceptable. Thus, this material can be used to repair all nickel-molybdenum-vanadium steels used in steam turbine-generator rotors.

8                     52,192

CLAIMS:

1. A method for effecting weld repairs to a nickel-molybdenum-vanadium steel steam turbine-generator rotor which comprises making one or more weld passes using a filler metal alloy to repair a defect in the rotor; characterized by preparing a filler metal alloy consisting essentially of, by weight per cent, 0.090-0.110 carbon, 1.25-1.80 manganese, up to 0.010 phosphorus, up to 0.010 sulfur, 0.20-0.50 silicon, 1.40-2.10 nickel, up to 0.30 chromium, 0.25-0.55 molybdenum, up to 0.05 vanadium, up to 0.10 titanium, up to 0.10 zirconium, up to 0.10 aluminum, up to 0.20 copper, up to 0.0015 antimony, up to 0.015 tin, up to 0.020 arsenic, and up to, in ppm, 35 oxygen, 25 nitrogen, and 10 hydrogen, the balance being iron; and vacuum melting said alloy, whereby welds using said filler material exceed the rotor base-material in strength, notch toughness, and resistance to temper embrittlement.

2. A method according to claim 1, characterized in that the welded part is subjected to a post-weld heat treatment at a temperature between 50 degrees F less than the rotor final tempering temperature and the rotor final tempering temperature.

3. A method according to claim 1 or 2, characterized in that chromium is held to 0.10-0.25.

4. A method according to claim 1, 2 or 3, characterized in that zirconium is 0.010 maximum.

5.   A method according to claim 1, 2, 3 or 4, characterized in that phosphorus is 0.005 max., sulfur is 0.005 max., tin is 0.0015 max. and arsenic is 0.006 max.